# EUROPÄISCHE PATENTANMELDUNG

(11) **EP 2 017 758 A1**
(43) Veröffentlichungstag der Anmeldung: **21.01.2009**
(21) Anmeldenummer: 07012921.8
(22) Anmeldetag: 02.07.2007
(51) Int. Cl.: G06F 21/00

(54) **Computergestütztes System und computergestütztes Verfahren zur Inhaltsverifikation**

(71) Anmelder: Fraunhofer-Gesellschaft zur Förderung der angewandten Forschung e.V., 80686 München (DE)
(72) Erfinder: Gottschick, Jan, 12161 Berlin (DE); Kurrek, Holger, 12437 Berlin (DE)
(74) Vertreter: Pfenning, Meinig & Partner GbR

(57) **Zusammenfassung**

Die vorliegende Erfindung bezieht sich auf ein computergestütztes System und ein computergestütztes Verfahren zur Inhaltsverifikation. Dieses umfasst neben einem zur Datenkommunikation ausgebildeten Endgerät eine Verifikationseinheit (2), mit welcher aus einem von dem Endgerät von einer Herkunftsadresse empfangenen Datenelement ein elektronischer Fingerabdruck generierbar ist, und eine Vergleichseinheit (3), mit welcher der von der Verifikationseinheit generierte elektronische Fingerabdruck des empfangenen Datenelementes mit mindestens einem elektronischen Fingerabdruck mindestens eines vordefinierten Datenelements auf Übereinstimmung vergleichbar ist und mit welcher die Herkunftsadresse des empfangenen Datenelements auswertbar ist.

## Beschreibung

Die vorliegende Erfindung bezieht sich auf ein computergestütztes System zur Inhaltsverifikation und ein computergestütztes Verfahren zur Inhaltsverifikation. Insbesondere bezieht sich die vorliegende Erfindung auf ein merkmalorientiertes System bzw. ein merkmalorientiertes Verfahren zur Erkennung und zur Blockierung von betrügerischen Inhalten aus dem Internet.

Bei Betrugsversuchen durch sog. "Phishing" wird dem potentiellen Opfer (dem Nutzer eines lokalen Rechnersystems) ein vertrauenswürdiger Inhalt aus dem Internet vorgespiegelt. Dieser angeblich vertrauenswürdige Inhalt soll dem Opfer falsche Informationen mitteilen und es zum Verrat von Geheimnissen (z.B. PIN, TAN, Passwort etc.) an den Angreifer verführen. Dabei gibt das Opfer die Geheimnisse in der Annahme weiter, diese Informationen an den rechtmäßigen Empfänger (dieser kann beispielsweise eine Bank sein) zu senden. Das Phishing erfolgt hierbei mit Hilfe von Webseiten, E-Mails oder auch anderen Dokumententypen, die direkt eine Eingabe von Daten durch den lokalen Benutzer ermöglichen oder auf eine Eingabemöglichkeit verweisen. Diese Phishingseiten verwenden ein den Originalseiten nachempfundenes Aussehen und enthalten entsprechende Graphiken (beispielsweise Bilder, Logos, Schriftzüge) und Textpassagen, die von den Originalseiten kopiert wurden.

Zur Zeit erfolgt ein Schutz vor Phishingangriffen ausschließlich über die Erkennung von Internet-Adressen (IP-Adressen oder DNS-Rechnernamen) schon bekannt gewordener Phishingangriffe anhand von sog. Negativlisten (alternativ auch als Blacklists bezeichnet), in denen die Ursprungsadressen von bekannt gewordenen Angreifern verzeichnet sind. Werden diese Ursprungsadressen in den Werkzeugen zur Anzeige von Inhalten (nachfolgend auch als Content Viewer bezeichnet), also z.B. Webbrowsern oder E-Mail-Programmen, erkannt, so wird an den lokalen Benutzer eine Warnung ausgegeben. Es werden dabei bisher nur Ursprungsadressen und weitere Merkmale des Netzwerks selbst zur Verifikation verwendet.

Ausgehend vom Stand der Technik ist es die Aufgabe der vorliegenden Erfindung, ein computergestütztes System und ein computergestütztes Verfahren zur Inhaltsverifikation zur Verfügung zu stellen, wobei das System bzw. das Verfahren ein schnelles Erkennen von Betrugsversuchen in Netzwerksystemen, insbesondere im Internet, und ein schnelles und zuverlässiges Verhindern von weiteren Schäden durch entsprechende Betrugsversuche ermöglicht.

Die erfindungsgemäße Aufgabe wird durch ein computergestütztes System nach Patentanspruch 1 sowie durch ein computergestütztes Verfahren nach Patentanspruch 30 gelöst. Vorteilhafte Ausgestaltungsvarianten des Systems bzw. des Verfahrens finden sich in den jeweiligen abhängigen Patentansprüchen. Erfindungsgemäße Verwendungen sind im Patentanspruch 32 beschrieben.

Nachfolgend folgt nun zunächst eine Begriffsdefinition der bei der Beschreibung der Erfindung verwendeten Begriffe. Dieser schließt sich eine generelle Beschreibung der Erfindung sowie der Vorteile der vorliegenden Erfindung an. Anschließend erfolgt eine ausführliche Beschreibung der vorliegenden Erfindung anhand eines Ausführungsbeispiels.

Einzelne erfindungsgemäße Merkmale können hierbei nicht nur in einer Kombination, wie sie in dem speziellen ausführlichen Ausführungsbeispiel beschrieben werden, auftreten, sondern können im Rahmen der Erfindung auch in beliebigen anderen Kombinationsmöglichkeiten ausgebildet sein bzw. verwendet werden.

In der Beschreibung der vorliegenden Erfindung werden nachfolgend die folgenden Begriffe verwendet: Unter einem Datenelement wird eine in elektronischer Form, insbesondere in binärer Form, vorliegende Menge von Informationen verstanden, welche beispielsweise in Form einer oder mehrerer Dateien zwischen unterschiedlichen Geräten (beispielsweise Computersystemen oder PCs), welche über ein Netzwerk verbunden sind, übertragen werden kann. Ein solches Datenelement kann insbesondere ein Webdokument umfassen; es umfasst in der Regel mehrere einzelne Inhalte (wie Graphiken, Videos, Texte usw.) und/oder deren graphische Repräsentation. Unter einer Darstellungseinheit wird nachfolgend ein Werkzeug zum Darstellen eines Inhalts auf einem Rechnersystem, insbesondere PC, verstanden. Die Darstellungseinheit wird alternativ auch als Content Viewer oder Webbrowser bezeichnet. Unter graphischer Repräsentation wird die Darstellung des Inhalts oder der Inhalte verstanden, wie sie die Darstellungseinheit für den Benutzer anzeigt. Ein Inhalt kann hierbei auch ein Bereich bzw. ein Teilelement eines solchen Datenelements sein (beispielsweise die linke obere Ecke eines Webdokuments bzw. der zugehörigen Graphik). Unter einem elektronischen Fingerabdruck wird ein Merkmal verstanden, welches aus einem Datenelement, also aus einem Inhalt oder der graphischen Repräsentation eines solchen Inhalts insbesondere mittels mathematischer Verfahren extrahiert werden kann und welches das Datenelement kennzeichnet (wobei die Kennzeichnung vorteilhafterweise für jedes Datenelement eindeutig ist). Ein solcher elektronischer Fingerabdruck wird nachfolgend alternativ auch als Fingerprint, Merkmalsvektor oder Content Feature Vector bezeichnet. Ein elektronischer Fingerabdruck, insbesondere in Form eines Merkmalsvektors, kann beispielsweise mit Hilfe einer Prüfsummenfunktion generiert werden: Hierbei wird anhand eines oder mehrerer Inhalte eines Datenelements ein Prüfsummenwert bzw. Ähnlichkeitsmaß berechnet, welcher eine nahezu eindeutige Kennzeichnung der übergeordneten Menge des Datenelements ermöglicht. Unter einer Positivliste (alternativ: Whitelist) wird nachfolgend eine beispielsweise in einem Speicher oder Cache-Speicher ablegbare Menge von Informationen (z.B. in Form von Merkmalsvektoren) in Listenform verstanden, wobei die Listenelemente Datenelemente bekannter Herkunft bzw. Webseiten verlässlicher Anbieter sind. Unter einer Negativliste bzw. Blacklist wird nachfolgend eine Liste von Herkunftsadressen verstanden, wobei eine solche Herkunftsadresse z.B. eine Internetadresse und/oder auch der im Zertifikat einer verschlüsselten Verbindung hinterlegte Name des Absenders sein kann und wobei die Blacklist damit solche Anbieter verzeichnet, welche im Verdacht eines Betrugs stehen oder bereits entsprechend auffällig geworden sind. Erfindungsgemäß können im Unterschied zum Stand der Technik alternativ oder zusätzlich auch Merkmalsvektoren als Listenelemente und zum Vergleich auf Übereinstimmung verwendet werden. Die beschriebenen Arten der Herkunftsadressen können erfindungsgemäß, wie nachfolgend noch näher beschrieben wird, auch im Rahmen von Positivlisten ausgewertet werden.

Nachfolgende Begriffe werden synonym zueinander verwendet:
- Verifikationseinheit und Content Verifier
- Vergleichseinheit und Content Feature Analyzer
- Copyright Protector und Zentralvorrichtung bzw. Zentralserver

Die Bedeutung der vorstehend aufgezählten Begriffe ergibt sich dabei nachfolgend aus der Beschreibung der Erfindung.

Alle vorgenannten Einheiten können entweder als Softwarelösung (Programm bzw. Programmteile) implementiert werden, es ist alternativ oder zusätzlich jedoch auch die Implementierung der Einheiten oder Teile derselben als Hardwarelösung möglich. Wie nachfolgend noch näher beschrieben, können die einzelnen Einheiten hierbei entweder in einem Computersystem eines Benutzers vor Ort, ebenso jedoch auch in einem zentralen Server eines Diensteanbieters (Provider) installiert sein. Auch eine teilweise Installation der Einheiten im Nutzer-PC und im Server des Providers ist möglich.

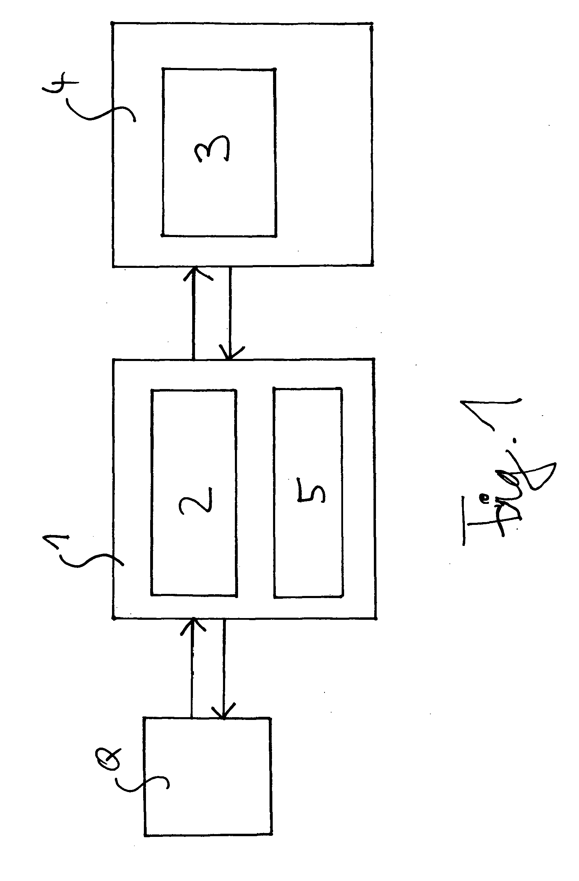

Die Lösung der erfindungsgemäßen Aufgabe basiert grundlegend darauf, nicht nur die Herkunftsadresse (z.B. in Form einer Internetadresse und/oder in Form des im Zertifikat einer verschlüsselten Verbindung hinterlegten Namens eines Absenders) möglicher betrügerischer Netzwerkinhalte auszuwerten, sondern die Inhalte entsprechender Datenelemente bzw. Webseiten zusammen mit ihrer Herkunft auszuwerten. Hierzu wird ein computergestütztes System (bzw. ein entsprechendes Verfahren) erfindungsgemäß zur Verfügung gestellt, welches ein zur Datenkommunikation ausgebildetes Endgerät, eine Verifikationseinheit 2 und eine Vergleichseinheit 3 zur Verfügung stellt (Figur 1). Das zur Datenkommunikation ausgebildete Endgerät 1 (beispielsweise: PC) empfängt von einer Datenquelle Q (unbekannter Server) ein Datenelement (beispielsweise Webseite). Das Endgerät 1 weist nun eine Verifikationseinheit 2 auf, mit welcher aus dem empfangenen Datenelement ein elektronischer Fingerabdruck generiert werden kann (wie dies geschieht, wird nachfolgend noch näher beschrieben; die Verifikationseinheit 2 kann auch teilweise oder ganz im nachfolgend noch näher beschriebenen Zentralserver 4 ausgebildet sein). Das Endgerät 1 ist hier weiterhin zur Datenkommunikation mit einem vorteilhafterweise vorgesehenen Zentralserver 4 eines Providers verbunden. In diesem ist die Vergleichseinheit 3 ausgebildet, welche alternativ jedoch auch (bei fehlendem Zentralserver 4) im Endgerät 1 ausgebildet sein kann. In der Vergleichseinheit 3 wird der von der Verifikationseinheit generierte elektronische Fingerabdruck (welcher hier vom Endgerät 1 an den Server 4 übermittelt wird) des Datenelements mit mindestens einem elektronischen Fingerabdruck mindestens eines vordefinierten Datenelements auf Übereinstimmung verglichen. Dies geschieht, wie nachfolgend noch näher beschrieben, vorteilhafterweise mittels unscharfer Vergleichsverfahren. Ebenso wird mit der Vergleichseinheit 3 die Herkunftsadresse der Datenquelle Q des empfangenen Datenelements ausgewertet. Diese Auswertung kann vorteilhafterweise dadurch geschehen, dass die Herkunftsadresse auf ihre Übereinstimmung mit Herkunftsadressen der vordefinierten Datenelemente (beispielsweise Webseiten) verglichen wird, welche beispielsweise in einem Cache-Speicher der Vergleichseinheit 3 abgelegt sind. Auch dieser Vergleich geschieht vorteilhafterweise mittels unscharfer Verfahren.

Vorteilhafterweise wird, hier beispielsweise in dem Endgerät 1, darüberhinaus eine Reaktionseinheit 5 zur Verfügung gestellt, mit welcher basierend auf dem Ergebnis des Vergleichs der elektronischen Fingerabdrücke und der Auswertung der Herkunftsadresse ein Reaktionsereignis ausgelöst werden kann (beispielsweise das Sperren der weiteren Dateneingabe und Datenübermittlung von über das Endgerät 1 einzugebenden, an die Quelle Q zu übermittelnden Daten). Die Reaktionseinheit 5 kann alternativ ebenso teilweise oder ganz im Zentralserver 4 ausgebildet sein.

Gegenüber den aus dem Stand der Technik bekannten Vorrichtungen bzw. Verfahren weist die vorliegende Erfindung eine Reihe erheblicher Vorteile auf:
- Der wichtigste Vorteil des erfindungsgemäßen Systems bzw. Verfahrens ist das Erkennen von gefälschten Inhalten (z.B. Phishingversuchen) anhand der graphischen Repräsentation des Inhaltes in der Darstellungseinheit, unabhängig davon, wie die graphische Darstellung erzeugt wurde. Durch die Nutzung unscharfer Vergleichsverfahren und Regeln zur Steuerung der Vergleichsverfahren werden auch Varianten erkannt.
- Ein weiterer wesentlicher Vorteil des erfindungsgemäßen Systems bzw. Verfahrens ist die Möglichkeit einer sehr schnellen Erkennung von PhishingVersuchen, da die Inhalte eines Datenelements mittels einer Positivliste bzw. Liste vordefinierter Datenelemente und Herkunftsadressen von zulässigen Datenelementen und Herkunftsadressen zuverlässiger Anbieter abgeglichen werden und nicht nur mit einer Negativliste der Adressen von bereits bekannten gefälschten Seiten gearbeitet wird. Zusätzlich kann der Betreiber des Originals (z.B. Bank oder ähnliches) einer gefälschten Seite sofort automatisch über das Auftreten einer gefälschten Seite informiert werden, um weitere Maßnahmen gegen den Angreifer bzw. Betrüger zeitnah einleiten zu können. Hierdurch werden auch unnötige Fehlalarme bei den registrierten Seiten verhindert.
- Durch die automatische Erkennung von PhishingVersuchen bzw. Betrugsversuchen gemäß der Erfindung kann bereits beim ersten Auftreten einer gefälschten Webseite der Nutzer des Endgerätes gewarnt und weiterer Schaden bei ihm verhindert werden. Außerdem sind sofort nach dem Auftreten des ersten Falls mit Hilfe der Reaktionseinheit Gegenmaßnahmen möglich, welche weitere Angriffe verhindern oder abmildern, ohne dass der Angegriffene dies erst selbst bemerken muss.
- Durch die mögliche Integration wesentlicher Elemente des erfindungsgemäßen Systems in vorhandene Elemente zur graphischen Darstellung (Content Viewer bzw. Darstellungseinheit) kann die vorliegende Erfindung auf einfache und schnelle Art und Weise implementiert werden. Damit spielt es keine Rolle mehr, wie die Seite softwaretechnisch erzeugt wurde.
- Durch die bei Herkunftsadressen mögliche Auswertung der Absenderbezeichnung von verschlüsselten Verbindungen (z.B. CN aus dem Zertifikat bei TLS/SSL) wird dem ungeübten Nutzer auch die Prüfung der Zertifikate abgenommen.

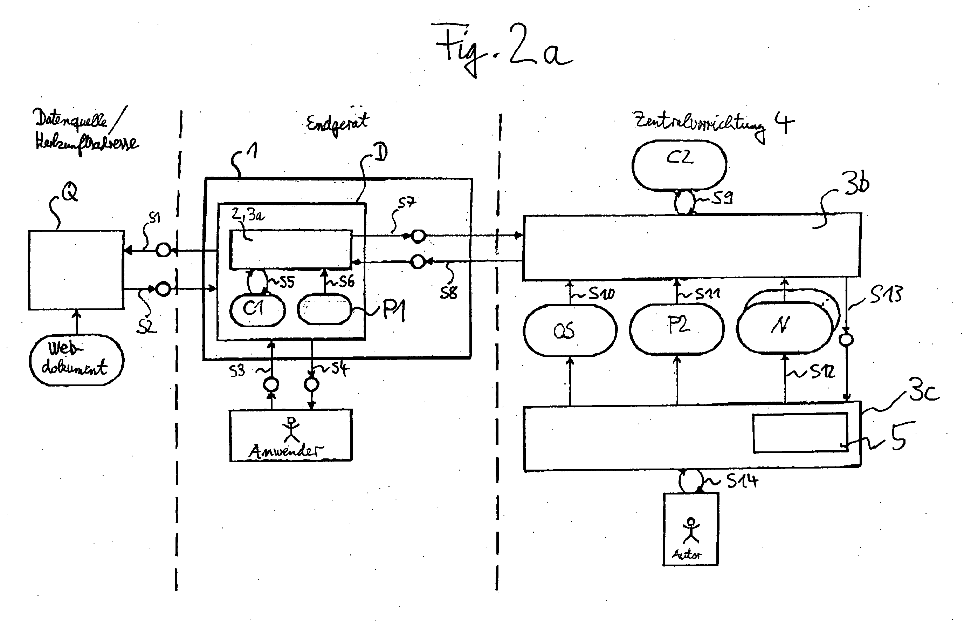

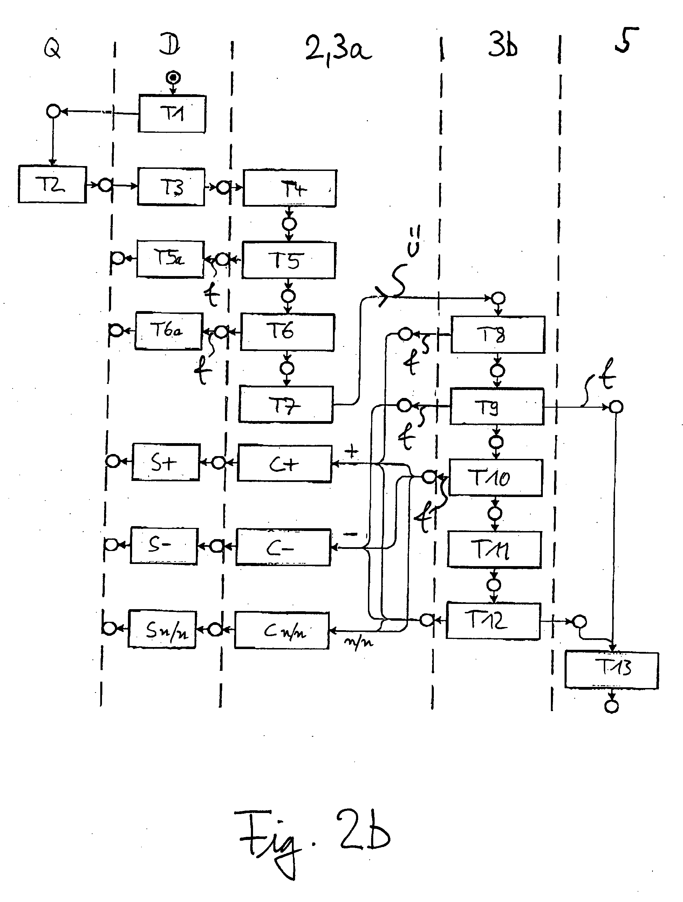

Figur 2 zeigt die konkrete Ausgestaltung eines erfindungsgemäßen Systems anhand eines ausführlichen Ausführungsbeispiels. Zunächst erfolgt eine allgemeine Beschreibung des Aufbaus anhand von Figur 2A. Dem schließt sich eine Beschreibung der einzelnen Schritte des erfindungsgemäßen Verfahrens anhand des Flussdiagramms der Figur 2B an.

In Figur 2A ist die unbekannte Datenquelle bzw. Herkunftsadresse Q über das Intranet mit dem Endgerät 1 des Benutzers verbunden. Die Datenquelle Q kann vom Benutzer angeforderte S1 Webdokumente an das Endgerät des Benutzers liefern S2. Im Endgerät 1 des Benutzers ist eine Darstellungseinheit in Form eines Webbrowsers D implementiert. Der Webbrowser D weist als zusätzlichen Programmteil 2, 3a die Verifikationseinheit 2 und einen Teil der Vergleichseinheit 3 (Teileinheit 3a) auf. Die Verifikationseinheit 2 und der Teil 3a der Vergleichseinheit 3 nutzen den ersten Cache-Speicher C1 (Informationsspeicherung und Abruf S5) und die erste Positivliste P1 (Informationsübermittlung S6) zur erfindungsgemäßen Erstellung eines elektronischen Fingerabdrucks eines von der Quelle Q empfangenen Webdokuments und zum Vergleich des erstellten elektronischen Fingerabdrucks mit elektronischen Fingerabdrücken zulässiger Webseiten, wie sie in der Positivliste P1 von Fingerabdrücken abgelegt sind. Die Kommunikation des Anwenders mit dem Endgerät bzw. PC 1 geschieht über die Signaldatenwege S3 (Übermittlung von Eingabedaten an den PC) und S4 (Darstellung von Ergebnissen am Bildschirm des PCs).

Über die Signaldatenwege S7 und S8 ist das Endgerät 1 nun zur Datenkommunikation mit dem Zentralserver bzw. Copyright Protector 4 eines Serviceproviders verbunden.

Im Zentralserver 4 sind hier weitere Teile 3b, 3c der Vergleichseinheit 3 in Form von geeigneten Softwareprogrammen bzw. Programmteilen implementiert. Die Inhalts-Merkmalsvektoranalyseeinheit 3b übernimmt hierbei die Aufgabe, den über den Signalweg S7 vom Endgerät 1 übermittelten generierten elektronischen Fingerabdruck des in Frage stehenden Webdokuments mit den elektronischen Fingerabdrücken einer Vielzahl von vordefinierten Webdokumenten auf Übereinstimmung zu vergleichen und die Herkunftsadresse des empfangenen Webdokuments auszuwerten (dies wird nachfolgend noch ausführlich beschrieben). Um einen solchen Vergleich möglichst effizient durchzuführen, weist die Zentralvorrichtung 4 einen zweiten Cache-Speicher C2 auf, welcher von der Inhalts-Merkmalsvektoranalyseeinheit 3b über den Signalweg S9 angesprochen wird. Als Ergebnis des Vergleichs von der Zentralvorrichtung 4 an das Endgerät 1 zu übermittelnde Reaktionen (siehe auch nachfolgende Beschreibung) werden über den Signalweg S8 an das Endgerät 1 übermittelt. Um den Vergleich der elektronischen Fingerabdrücke durchzuführen, steht die Inhalts-Merkmalsvektoranalyseeinheit bzw. der Content Feature Vector Analyzer 3b mit einem weiteren Speicher OS in Verbindung S10, in welchem die Links zu Originalseiten oder die Originalseiten selbst von verlässlichen Anbietern abgelegt sind. Aus diesen vordefinierten Webseiten bzw. Datenelementen kann der Teil 3b der Vergleichseinheit, wie nachfolgend noch näher beschrieben, entsprechende elektronische Fingerabdrücke generieren und zum Vergleich mit dem empfangenen elektronischen Fingerabdruck bereitstellen. Alternativ hierzu kann auch die in einem weiteren Speicher (Zugriffspfad S11) abgelegte weitere Positivliste P2 verwendet werden, in der für vordefinierte Datenelemente bzw. Webseiten bereits vorab bestimmte bzw. vordefinierte elektronische Fingerabdrücke abgelegt sind. Zusätzlich kann der Vergleichseinheitsteil 3b (Zugriffspfad S12) auf eine weitere Liste in Form einer Negativliste N zugreifen, in der elektronische Fingerabdrücke und Herkunftsadressen von betrügerischen Webservern abgelegt sind. Wird somit beim Vergleich des Inhalts (über die elektronischen Fingerabdrücke bzw. Merkmalsvektoren) oder der Herkunftsadresse der von der Quelle Q empfangenen Webseite festgestellt, dass diese von einer Quelle stammt, deren Adresse in der Negativliste N gelistet ist, so kann unmittelbar eine geeignete Reaktion ausgelöst werden.

Die zentrale Steuerung der Einheit 3b sowie der verschiedenen Speicher und Listen OS, C2, P2 und N geschieht in der Zentralvorrichtung 4 hierbei mittels einer weiteren Teileinheit 3c der Vergleichseinheit 3, welche nachfolgend auch als Copyright Management System bezeichnet wird. An diese wird auch von der Einheit 3b das Ergebnis des oder der Vergleiche übermittelt (S13). Das Copyright Management System 3c umfasst im vorliegenden Fall auch eine Reaktionseinheit 5, mit welcher auf Basis der Vergleichsergebnisse entsprechende Reaktionen an die Einheit 3b und über den Signalweg S8 an das Endgerät übermittelbar sind. So kann beispielsweise eine Dateneingabe im Endgerät 1 bzw. eine Datenübermittlung durch das Endgerät 1 an die Quelle Q verhindert werden. Die von einem autorisierten Autor zur Verfügung gestellten Webseiten können von diesem S14 an das Copyright Management System 3c des Providers übermittelt werden und von diesem in dem Speicher OS abgelegt werden.

Nachfolgend wird nun die Funktionsweise des Beispielsystems der Figur 2A ausführlich beschrieben:

Das erfindungsgemäße System erkennt die Herkunft bekannter Inhalte von einer nicht autorisierten Quelle auf Basis von Positivlisten P und unscharfen Analyseverfahren. Hierzu wird die Erweiterung des Content Verifiers 2, 3a des Webbrowsers D zur Darstellung von Inhalten aus dem Internet eingesetzt. Anstelle eines Webbrowsers kann auch ein E-Mail-Programm, Chatprogramm oder ein anderer Contentviewer verwendet werden. Der Webbrowser bzw. die Darstellungseinheit D lässt die Inhalte überprüfen und zeigt mögliche Fälschungen an sowie blockiert weitere in die Seite eingebettete Benutzeraktionen nach entsprechender Informationsübermittlung durch die Reaktionseinheit 5. Hierzu werden vom Content Verifier 2, 3a ein oder mehrere Prüfsummen als elektronischer Fingerprint von der Darstellung und den Inhalten des betrachteten Datenelements (hier Webseite, es lassen sich jedoch auch E-Mails als Datenelemente verwenden) bzw. auch nur von Teilen des Datenelements, beispielsweise von in der Webseite verwendeten Symbolen wie Logos, Schriftzügen, Bilder, ... erzeugt. Diese Prüfsummen werden zusammen mit der Herkunftsadresse bzw. Ursprungsadresse dem Copyright Protector 4 bzw. der Zentralvorrichtung zur Überprüfung übergeben. Ein wesentliches Merkmal der Vorrichtung bzw. des mit der Vorrichtung durchgeführten Verfahrens ist, dass sowohl der textuelle Inhalt einer Webseite als auch deren graphische Darstellung (Rendering) im Content Verifier genutzt werden kann. Aus diesem Grunde spielt es keine Rolle mehr, wie die Webseite softwaretechnisch genau erzeugt wurde. Sowohl von den Originalwebdokumenten der verlässlichen Anbieter (vgl. Speicher OS bzw. Positivliste P1, P2) als auch von dem von der unbekannten Quelle Q empfangenen Webdokument wird somit jeweils mindestens ein elektronischer Fingerabdruck erzeugt. Natürlich können von jedem untersuchten bzw. verwendeten Webdokument auch mehrere elektronische Fingerabdrücke erzeugt werden.

In einem nächsten Schritt wird in dem Teil 3b der Vergleichseinheit die Prüfsumme bzw. der elektronische Fingerabdruck des von der Quelle Q gelieferten Datenelements mit den entsprechenden Prüfsummen bzw. elektronischen Fingerabdrücken der von den verlässlichen Anbietern gelieferten bzw. gespeicherten Originalseiten (bzw. deren Teilen) verglichen. Erfolgt eine positive Erkennung, wird die Ursprungsadresse des zu prüfenden Inhalts mit der gespeicherten Herkunftsadresse der Originalseite verglichen. Sind diese beiden Adressen nicht gleich (beispielsweise andere Domain), so ist dies ein Zeichen für einen möglichen Phishing-Angriff und der Anwender erhält eine Rückmeldung im Content Viewer (Anzeige S4), dass diese Seite gefälscht sein könnte. Gleichzeitig kann der Betreiber der Originalseite informiert werden (S13, S14). Der Anbieter kann beispielsweise die Seite vollständig überprüfen und Gegenmaßnahmen einleiten. Hierbei kann es sich beispielsweise um das Stellen einer Strafanzeige, die Sperrung der Phishing-Webseite beim zuständigen Internetprovider oder die Eintragung der Ursprungs- bzw. Herkunftsadresse bei externen Anbietern von Negativlisten und die Verteilung von Warnungen an seine Kunden handeln. Sowohl die bei der Berechnung bzw. Erzeugung der Prüfsumme bzw. des elektronischen Fingerabdrucks verwendeten Verfahren, als auch die für den Vergleich der elektronischen Fingerabdrücke und für den Vergleich der Herkunftsadressen verwendeten Verfahren sind hierbei als unscharfe Verfahren ausgestaltet, so dass auch ohne weiteres leichte Abweichungen erkannt werden können. Das konkrete, unscharfe Verfahren hängt vom Typ jedes einzelnen Datenelements ab. Für den unscharfen Vergleich von Texten oder Webadressen kann man beispielsweise Fuzzy-Matching (Phonetische Suche, String Edit Distance, Levenshtein Distance oder N-Gramme) verwenden. Für Grafiken gibt es beispielsweise Filter für die Bildverarbeitung, statische Verfahren zur Berechnung der Farbverteilung, Texturen und geometrischen Formen oder die verlustbehafte Kompression (Wavelets mit hohen Kompressionsraten). Für die Berechnung der Ähnlichkeit werden Gewichtungsregeln und Fuzzy-Logik benutzt.

Im konkreten Anwendungsfall lädt somit der Anwender eine Webseite seiner XY-Bank in seinen Webbrowser D (wobei die Erfindung nicht auf Webbrowser beschränkt ist, sondern auch im Rahmen von E-Mail-Programmen, Chattools, Browsern auf mobilen Endgeräten oder für jede andere Art der Kommunikation, bei der Inhalte in einen Content Viewer geladen und graphisch dargestellt werden, implementiert werden kann). In diesem Fall stammt somit das Datenelement bzw. die Webseite von dem Webserver Q der XY-Bank.

Ein Phisher (Angreifer bei einer Phishing-Attacke) erreicht nun durch verschiedene Angriffsmethoden (beispielsweise Pharming, DNS-Spoofing, IP-Spoofing), dass der Anwender eine andere als die eigentlich gewünschte Webseite von seiner Bank (gefälschte Webseite) lädt. Die von einem Phisher-Server Q' stammende gefälschte Webseite muss hierbei zur Täuschung des Anwenders ein weitgehend gleiches Aussehen wie die Originalseite des Servers Q haben. Dazu nutzen Phisher kopierte Teile der Originalseite, wie Bilder, Logos, Schriftzüge bzw. deren graphische Entsprechung. Trotzdem weist die Seite des Phisher-Servers Q' Unterschiede auf, z.B. bei den Abfragen für Eingabedaten, wie PINs, TANs usw.

Auf Basis von Positivlisten wird nun ein solcher Missbrauch durch einen Phisher verhindert, indem ein Missbrauch bekannter Inhalte auf einfache und schnelle Art und Weise erkennbar gemacht wird und schnelle Gegenmaßnahmen, wie Warnungen und Sperrungen ergriffen werden. Hierzu ist der Webbrowser D mit der Erweiterung des Content Verifiers 2, 3a versehen, welcher eine Beschreibung vom Erscheinungsbild der (ggf. gefälschten) Webseite, den Content Feature Vector bzw. den elektronischen Fingerabdruck erzeugt. Dieser elektronische Fingerabdruck wird dann dazu genutzt, anhand der Positivlisten P1 und P2 bekannter Webseiten zu prüfen, ob dieses Erscheinungsbild bereits bekannt ist. Diese Prüfung erfolgt im vorliegenden Fall sowohl mit einer ersten Positivliste P1 im Endgerät bzw. auf dem angreifbaren System des Anwenders, als auch unter Einsatz einer zweiten Positivliste P2 (bzw. der Originalwebseiten OS) im Content Feature Vector Analyzer 3b als Teil der Zentralvorrichtung 4. Der Copyright Protector 4 wird hierbei durch einen Dienst von einem verlässlichen Dienstleister realisiert. Die lokale vereinfachte Prüfung auf dem System 1 des Nutzers (PC mit Webbrowser) im Content Verifier 2, 3a erfolgt aus Performancegründen anhand der vorinstallierten Positivliste P1 sowie mit zwischengespeicherten Ergebnissen (Cache C1). Die Positivliste P1 kann hierbei wie die Patterndatei eines Virenscanners regelmäßig aktualisiert werden. Der Cache C1 kann auch bereits vom Copyright Protector 4 abgefragte Einträge bzw. elektronische Fingerabdrücke enthalten.

In einer Positivliste P (bzw. in einem zugehörigen Cache C) kann für jede schon geprüfte vertrauenswürdige Webseite ein Eintrag aus drei Teilen enthalten sein (der Eintrag enthält hierbei mindestens einen der drei Teile, bevorzugt alle drei der nachfolgend aufgeführten Teile) :
- Elektronischer Fingerabdruck in Form eines Content Feature Vectors bzw. Merkmalsvektors (aus den Inhalten von Webseiten berechnet und vordefinierbar: der Eintrag kann somit vorteilhafterweise für die autorisierten Originalseiten bereits berechnet und in einem Speicher abgelegt worden sein, alternativ jedoch auch "on the fly" aus den vordefinierten Originalwebseiten berechnet werden),
- Überprüfungsvorschrift (legt die Teile bzw. Eigenschaften der Webseite fest, welche für den Vergleich mit diesem konkreten Content Feature Vector genutzt werden, beispielsweise Gewichtungsregeln) und
- Herkunftsadresse (gibt die Herkunft der Originalseite an) .

Wenn der Vergleich der elektronischen Fingerabdrücke bzw. Merkmalsvektoren in der Vergleichseinheit ergibt, dass das Erscheinungsbild bereits bekannt ist, kann im Falle eines Eintrags aus drei Teilen somit ebenfalls anhand der Positivlisten geprüft werden, ob die zugehörige Herkunftsadresse (Ursprungsadresse, Absenderadresse bzw. bei verschlüsselten Verbindungen der im Zertifikat hinterlegte Absendername) korrekt ist, also beispielsweise der Adresse der XY-Bank (Originalseite)entspricht.

Das Ergebnis der kumulativen Überprüfung der elektronischen Fingerabdrücke und der Herkunftsadressen hat hierbei im gezeigten Fall die folgenden drei Varianten:
- Der Merkmalsvektor bzw. elektronische Fingerabdruck ist bekannt und die Ursprungsadresse stimmt mit der zugehörigen Adresse in der Positivliste überein. Das Ergebnis entspricht dann dem "Grün" einer Verkehrsampel, der Anwender kann in die empfangene Webseite der Datenquelle Q gefahrlos Daten eingeben.
- Der Merkmalsvektor ist aus der Positivliste bekannt, die Ursprungsadresse weicht jedoch von den Adressen in der Positivliste bzw. von der diesem Merkmalsvektor zugeordneten Herkunftsadresse ab. Das Ergebnis entspricht dann dem "Rot" einer Verkehrsampel, der Anwender muss am Eingeben von Daten in diese offenkundig gefälschte Webseite gehindert werden. Die Ursprungsadresse und der Merkmalsvektor dieser gefälschten Webseite kann in die Negativliste N aufgenommen werden. Hierfür wird sie an den Betreiber der Originalseite sowie ggf. an mögliche externe Dienstleister, welche solche Listen betreiben, übermittelt.
- Der Merkmalsvektor ist in der Positivliste unbekannt, also noch nicht in der Positivliste enthalten. Das Ergebnis entspricht dann dem "Gelb" einer Verkehrsampel. Der Anwender muss somit für mögliche Gefahren beim Eingeben von Daten in diese empfangene Webseite sensibilisiert werden. Wird die Prüfung im System 1 des Benutzers durchgeführt, so kann in diesem Fall der unbekannte Merkmalsvektor zur weiteren Prüfung an die Zentralvorrichtung 4 übergeben werden, welche (bei gleichzeitigem Empfang des von der Quelle Q stammenden Webdokuments) die Webseite überprüft und beispielsweise in Abstimmung mit dem Betreiber des Servers der Quelle Q einen Eintrag in die Positivliste P2 und/oder die Positivliste P1 vornimmt.

Im Fall "Rot", also bei einem Phishing-Versuch, wird das bekannte Erscheinungsbild der Onlinebanking-Webseite der XY-Bank also eine gefälschte Ursprungsadresse haben. Daraufhin wird von der Reaktionseinheit 5 ein Alarm generiert, der dem Anwender im Webbrowser D eine Warnung anzeigt bzw. weitere Eingaben in diese Seite blockiert und auch den Betreiber der Originalseite (XY-Bank) informiert. Der Betreiber der Originalseite kann dann weitere Benutzer sofort zielgerichtet warnen und schnell gegen die Verbreitung der Phishingseite vorgehen. So kann der Betreiber der Originalseite beispielsweise beim zuständigen Provider die Sperrung dieser Phishing-Webseite beantragen und/oder deren Aufnahme in Negativlisten von Netzwerkprovidern beantragen und diese Warnung an seine eigenen Kunden weiterverteilen.

Da ein Phisher zwar wesentliche Teile des Erscheinungsbildes einer Webseite kopiert, aber bestimmte Elemente verändert, wird im vorliegenden Fall eine unscharfe Erkennung (unscharfes Analyseverfahren) des Erscheinungsbilds der Webseite für ein wirksames Detektieren (in der Vergleichseinheit 3) von Phishingangriffen eingesetzt. So werden von Phishern z.B. Bilder, Logos, Schriftzüge und Texte einer Originalseite genutzt, aber oft z.B. in Form von größeren Graphiken. Ein Beispiel für eine solche unscharfe Erkennung findet man bei der Texterkennung, wo Buchstaben entweder anhand von Pixelmustern (Patternmatching) oder anhand ihrer Form (Feature Recognition) erkannt werden. Wenn ein "A" anhand oben zusammenlaufender Linien mit einem waagerechten Querstrich beschrieben ist, wird man jedes "A" erkennen, während ein Pixelmuster bei einem veränderten Font nicht mehr zum Erfolg führt. Hierzu kombiniert eine unscharfe Analyse verschiedene Einzelverfahren: Neben der Analyse von einzelnen Graphiken, Texten oder Bildern werden komplette Bereiche der Webseite nach dem Darstellen bzw. Rendern (Erstellen des graphischen Abbilds im Webbrowser) mit den Originalseiten verglichen. Alle diese verschiedenen Vergleiche während der Analyse basieren auf einer mathematischen Abbildung des Inhalts der Webseite in Form des Merkmalsvektors. Eine Kombination verschiedener Einzelverfahren kann z. B. darin bestehen, dass die eingesetzten Farben bzw. Farbverläufe, die verwendeten Logos, das Größenverhältnis von graphischen Rahmenelementen und verschiedene Teilsätze des Textes einer Seite sowie durch Texterkennung in der graphischen Abbildung der Seite gefundene Texte (z. B. Werbeslogans) unabhängig voneinander analysiert und entsprechend einer Gewichtung anschließend mit den genauso errechneten Werten der Originalseite verglichen werden. Dabei kann der Grad der Ähnlichkeit durch einen Prozentsatz der Übereinstimmung vorgegeben werden.

Für den Content Feature Vector kann beispielsweise von einem Logo in der Webseite eine Prüfsumme (Hash) erzeugt werden. Ebenso ist ein Hash der oberen linken Ecke einer Webseite möglich. Dabei werden vorteilhafterweise nicht nur einfache Prüfsummen über das gesamte Objekt, sondern auch über einzelne Eigenschaften des Objekts (wie beispielsweise über Farbverläufe oder Strukturen) berechnet. Wie solche Prüfsummen aus Graphiken, insbesondere aus deren Pixelwerten und/oder Farbverläufen, berechnet werden, ist dem Fachmann bekannt. So kann z.B. anhand einer Ähnlichkeit ab einer vorgegebenen Quote von Gemeinsamkeiten eine Erkennung von Inhalten erfolgen. Neben den Inhalten der Webseite können auch Metainformationen, wie Adressen, Teile der Webbrowseroberfläche, Adressanzeigen und/oder auch Signaturinformationen mit in die Berechnung der elektronischen Fingerabdrücke und/oder den Vergleich der elektronischen Fingerabdrücke einbezogen werden. Hierbei ist es auch möglich, gezielt bestimmte Teile der zu analysierenden Datenelemente bzw. Webseiten auszublenden, wenn sich dort ständig wechselnde Inhalte (z.B. Bannerwerbung) befinden. Hierzu kann die oben beschriebene Überprüfungsvorschrift in der Positivliste genutzt werden, in der für jede bekannte und als vertrauenswürdig geprüfte Webseite beschrieben ist, welche Teile und Eigenschaften für die Errechnung des elektronischen Fingerabdrucks bzw. Merkmalsvektors genutzt werden sollen. Durch eine solche Überprüfungsvorschrift muss die Einbeziehung aller kritischen Teile (für Manipulationen im Rahmen von Angriffen geeignete Teile) sichergestellt werden. Die Überprüfungsvorschrift kann auch für den Abgleich mit den Cache-Speichern C genutzt werden.

Die Erstellung der elektronischen Fingerabdrücke der vordefinierten Datenelemente und der Überprüfungsvorschriften für bekannte, vertrauenswürdige Datenelemente kann entweder direkt durch den Betreiber eines Content Servers (beispielsweise XY-Bank) erfolgen oder auch in dessen Auftrag durch einen externen Dienstleister, welcher das Copyright Management System 3c betreibt. Ein solcher Dienstleister kann auch den Content Analyzer 3b betreiben, welcher im gezeigten Fall ebenfalls Teil der Zentralvorrichtung 4 ist. Die Pflege der in der Zentralvorrichtung 4 verwendeten Negativlisten N und Positivlisten P liegt in der Verantwortung des besagten Dienstleisters. Er erkennt durch die Bearbeitung von Überprüfungsanfragen S7 auch neue Angriffe bzw. Copyright-Verletzungen und kann Gegenmaßnahmen auslösen. Die Installation der Positivliste P1 auf dem lokalen System des Anwenders (PC 1 mit Webbrowser) kann direkt durch den Anwender oder mit der Installation des Webbrowsers (wie vorinstallierte Zertifikate) oder durch einen Aktualisierungsdienst (wie für Viren-Signaturlisten) erfolgen.

Wie bereits vorbeschrieben, erfolgt im vorgestellten Fall auch der Abgleich der Herkunftsadresse des von der Datenquelle Q empfangenen Datenelementes mit den Herkunftsadressen der vordefinierten Datenelemente bzw. Originalseiten unscharf, da beispielsweise Banken aus Gründen der Performance und Redundanz häufig mehrere Server über sog. Load-Balancer nutzen (so dass die Originalseiten bzw. die zugehörigen Server auch bei jedem Aufruf oder durch Wartungsarbeiten wiederholt unterschiedliche Adressen im Internet haben).

Die Herkunftsadresse kann anhand der numerischen IP-Adresse oder der alphanumerischen Namensteile (Internet-Adresse nach dem Domain Name System DNS), wie sie in der URL oder in der Bezeichnung in einem Zertifikat bei verschlüsselten Verbindungen (X.509-Zertifikat bei TLS- bzw. SSL-Kommunikation) verwendet werden, analysiert werden. Bei numerischen IP-Adressen können z. B. durch Lastverteilung (oder Network Address Translation, NAT) verschiedene dynamisch vergebene Serveradressen aus einer Folge vergeben werden. Hier könnte für Originalseiten eine Adressspanne angegeben werden, so dass jede Adresse aus diesem Adressbereich als korrekte Herkunftsadresse akzeptiert wird.

Bei alphanumerischen Adressen können im Rahmen von Notfallkonzepten auch unterschiedliche Bezeichnungen durch ein Maskieren mit sogenannten Wildcards bzw. technisch durch reguläre Ausdrücke erkannt werden, so dass z. B. bei Adressen wie "server1.bank.de" hinter "server" alle Ziffern akzeptiert werden. Dabei muss natürlich auf eine eindeutige Identifizierbarkeit der Originaladressen geachtet werden.

Eine genauere Prüfung einer Ursprungsadresse (URL, beispielsweise "http://banking2.xy-bank.de/cgi/start.cgi/?") sollte hierbei auch den Pfadanteil (URL-Anteil hinter dem Servernamen, also "cgi/start.cgi/?") einbeziehen, welcher bei vielen Seiten dynamisch durch Content Management Systeme generiert wird und daher ebenfalls variabel sein kann. Ebenfalls sollten ähnliche Adressen, welche bewusst genutzt werden (beispielsweise "www.xy-bank.de" oder "www.xybank.de") abgedeckt werden.

Anhand des Flussdiagramms der Figur 2b wird nun die Vorgehensweise des erfindungsgemäßen Systems bzw. Verfahrens noch einmal in seiner Schrittabfolge beschrieben:

Vom Content Viewer D wird T1 ein bestimmtes Webdokument im Quellserver Q abgefragt, dem Endgerät 1 zur Verfügung gestellt T2 und als Inhalt beim Anwender wiedergegeben T3, S4. Der vom Content Verifier 2, 3a erzeugte T4 Content Feature Vector bzw. elektronische Fingerabdruck wird zunächst lokal im PC 1 des Benutzers vor Ort überprüft T5, indem er mit den in der Positivliste P1 vorhandenen elektronischen Fingerabdrücken verglichen wird. Findet sich f eine Übereinstimmung mit einem der elektronischen Fingerabdrücke in der Positivliste P1, so kann eine positive Bestätigung erfolgen T5a. Ebenso erfolgt eine positive Bestätigung T6a, wenn bei einer Überprüfung mittels der im Cache C1 gespeicherten Fingerabdrücke T6 eine positive Übereinstimmung festgestellt wird bzw. ein Auffinden f erfolgt. Im Cache kann alternativ oder zusätzlich auch eine negative Aussage bzw. Ablehnung für einen schon einmal geprüften Fall abgelegt sein. Erfolgt in den Schritten T5 und T6 kein Auffinden, so wird als nächstes eine Anfrage T7 an den Dienstleister übermittelt Ü. Bei diesem Dienstleister 4 wird dann ebenfalls in der gegebenenfalls durch andere Anfragen bzw. neuen Meldungen bereits aktuelleren Positivliste P2 gesucht T8, später wird ebenfalls in dem Cache C2 des Dienstleisters 4 gesucht T10. Im vorliegenden Fall kann ebenso die Überprüfung einer konventionellen Negativliste erfolgen T9 (wird das System hierbei fündig f, so kann unmittelbar zusätzlich eine entsprechende Reaktion erfolgen T13). Ist die Suche bei der Überprüfung der Positivliste T8 oder im Cache T10 erfolgreich f, +, so erfolgt eine positive Anzeige s+, welche auch zur beschleunigten Beantwortung späterer gleichartiger Anfragen im Cache hinterlegt werden kann c+. Wird hingegen eine Übereinstimmung mit einem Element der Negativliste erzielt T9, f, - so erfolgt eine negative Anzeige s-, welche ebenfalls im Cache hinterlegt werden kann c-. Sofern über ein Auffinden bzw. Nicht-Auffinden in der Positivliste P2, in der Negativliste N und/oder in dem Cache C2 nicht eindeutig entschieden werden kann n/n, erfolgt eine undefinierte Anzeige sn/n, welche ebenfalls im Cache zwischengespeichert werden kann cn/n.

Erst wenn bei der Überprüfung der Positivliste P2 und der Überprüfung des Caches C2 kein Treffer erzielt wurde, beginnt der Dienstleister mit einer neuen Überprüfung der unbekannten Webseite inkl. einer Abstimmung mit dem Content Provider (welcher z.B. eine andere Bank als die XY-Bank sein kann) und liefert dann entweder eine Aktualisierung der Positivliste P2 oder eine Warnung über eine neue gefälschte Seite (neuer Phishing-Angriff) an die Betroffenen (Feststellen eines Betrugsversuchs T13). Hierbei kann im Schritt T11 die Erstellung eines neuen Content Feature Vectors in Bezug auf die bislang unbekannte Webseite erfolgen.

Nachdem vom Provider eine Berechnung des elektronischen Fingerabdrucks der bislang unbekannten Webseite erfolgt ist, wird dieser entsprechend seiner Einstufung als Originalseite oder Fälschung mit einem entsprechenden Vermerk in den Cache aufgenommen (T12). Der Vergleich der Herkunftsadresse des zu prüfenden Inhalts aus der Quelle Q mit der für einen Content Feature Vector gespeicherten Herkunftsadresse einer Originalseite findet somit sowohl im Content Verifier 2, 3a im PC des Benutzers vor Ort beim Abgleich mit der dortigen Positivliste P1 und mit dem Cache C1 sowie, wenn dort jeweils kein Treffer erzielt wurde, auch im Content Analyzer 3b des Dienstleisters bzw. der Zentralvorrichtung 4 in den drei dort gezeigten Checks statt.

Die Überprüfung der Cache-Speicher C1, C2 ist hierbei in der vorliegenden Erfindung ebenso optional wie der gezeigte Check der Negativliste N: Beides dient lediglich der Erhöhung der Effizienz (der die Zentralvorrichtung 4 betreibende Dienstleister kann erkannte gefälschte Seiten direkt in die Negativliste N einstellen, um bei neuen Anfragen direkt und schnell eine negative Auskunft zu erteilen).

Nachfolgend werden nun weitere Nutzungsmöglichkeiten bzw. Anwendungsmöglichkeiten der vorliegenden Erfindung beschrieben:

Auf Basis der Verwendung einer Positivliste wie vorbeschrieben kann auch urheberrechtlich geschützter Inhalt erkennbar gemacht werden. Die Erfindung kann nicht nur in Webbrowsern, sondern auch in E-Mail-Programmen, Chattools, Browsern auf mobilen Endgeräten (WAP-Browser) oder für jede andere Art der Kommunikation, bei der Inhalte in einen Content Viewer geladen und graphisch dargestellt werden, eingesetzt werden. Prinzipiell kann somit jede paketorientierte Datenkommunikation im Rahmen der Erfindung behandelt werden, z.B. kann auch bei Sprach- oder Videokommunikation ein entsprechender Content Feature Vector erzeugt werden und somit die Erkennung von Fälschungen (Einspielen falscher Sprachnachrichten oder Videos) erfolgen.

Neben der Nutzung eines permanent verfügbaren Dienstes in Form eines Copyright Protectors bzw. Zentralservers 4 kann auch die Verwendung von lokalen Positivlisten und Cache-Speichern in Form einer Offlinelösung erfolgen. Hierbei kann dann ein Abgleich auch bei lediglich gelegentlich stattfindenden Kommunikationsverbindungen erfolgen. Hiermit können gerade mobile Endgeräte, wie Mobiltelefone, PDAs oder Navigationsgeräte ebenfalls gut gesichert werden.

Neben Warnungen bzw. Informationen der Anwender sind auch andere automatische Reaktionen über die Reaktionseinheit 5 denkbar: Beispielsweise das Blockieren aller Eingabefunktionen, die Abschaltung der Kommunikation oder das Sperren der Nutzer in Netzdiensten. Diese Reaktionen können sowohl lokal beim Anwender als auch zentral beim Dienstleister ausgelöst werden. Die Erfindung hat insbesondere den Vorteil, der Meldung erkannter Inhalte und ihres Ursprungs an eine zentrale Stelle. Aus diesem Grund lässt sie sich auch nicht nur für die Betrugserkennung, sondern auch für die Erkennung von Urheberrechtsverletzungen (beispielsweise widerrechtliche Verwendung geschützter Fotos, geschützter Designs oder geschützter Multimediaobjekte) einsetzen. Hierbei ist einer Vielzahl unterschiedlicher Angriffsmöglichkeiten und Fälschungsmöglichkeiten vorbeugbar, insbesondere durch die großflächige Auswertungsmöglichkeit können sehr viele unterschiedliche Nutzerzugriffe erkannt werden. So kann die Verwendung urheberrechtlich geschützter Inhalte bei jedem Content Provider im Internet erkannt werden, sobald ein Nutzer der Erfindung sich eine Seite dieses Content Providers ansieht. Beispielsweise kann durch die vorstehend beschriebene unscharfe Analyse jedes Foto mit einem urheberrechtlich geschützten Objekt wie dem Schriftzug "der Bevölkerung" im Reichstag in Berlin identifiziert und daraufhin ein Unterlassungsanspruch geltend gemacht werden. Ebenso können Quelltexte für Software, die einem Urheberrechtsschutz unterliegen, auf Webservern gefunden werden. Es ist auch möglich, die Verbreitung bewusst verteilten Inhalts über andere Server und Content Viewer (bzw. Benutzer) zu verfolgen und Bewegungsprofile (Nutzerprofile, Kundenprofile) zu erstellen. Auf diese Weise kann beispielsweise der Besuch bestimmter Webseiten in einer Reihenfolge im Zusammenhang mit der Identifizierung von Meinungen, Vorlieben etc. ausgewertet werden.

## Patentansprüche

1. Computergestütztes System zur Inhaltsverifikation umfassend
ein zur Datenkommunikation ausgebildetes Endgerät (1),
eine Verifikationseinheit (2), mit welcher aus einem von dem Endgerät von einer Herkunftsadresse empfangenen Datenelement ein elektronischer Fingerabdruck generierbar ist, und
eine Vergleichseinheit (3), mit welcher der von der Verifikationseinheit generierte elektronische Fingerabdruck des empfangenen Datenelementes mit mindestens einem elektronischen Fingerabdruck mindestens eines vordefinierten Datenelements auf Übereinstimmung vergleichbar ist und mit welcher die Herkunftsadresse des empfangenen Datenelements auswertbar ist.

2. Computergestütztes System nach dem vorhergehenden Anspruch,
***dadurch gekennzeichnet, dass***
dass der generierte elektronische Fingerabdruck mit einer Mehrzahl von elektronischen Fingerabdrücken von vordefinierten Datenelementen auf Übereinstimmung vergleichbar ist.

3. Computergestütztes System nach einem der vorhergehenden Ansprüche,
***dadurch gekennzeichnet, dass***
die Herkunftsadresse des empfangenen Datenelements durch Vergleich auf Übereinstimmung mit einer Herkunftsadresse aus einer Mehrzahl von vordefinierten Herkunftsadressen auswertbar ist
und/oder
dass die Herkunftsadresse des empfangenen Datenelements durch Vergleich auf Übereinstimmung mit den vordefinierten Datenelementen jeweils zugeordneten Herkunftsadressen auswertbar ist.

4. Computergestütztes System nach einem der vorhergehenden Ansprüche,
***dadurch gekennzeichnet, dass***
die Verifikationseinheit (2) und/oder die Vergleichseinheit (3) zumindest teilweise als Teil des Endgerätes und/oder im Endgerät ausgebildet ist
und/oder
dass die Verifikationseinheit (2) und die Vergleichseinheit (3) in einer gemeinsamen Verifikations- und Vergleichseinheit ausgebildet sind.

5. Computergestütztes System nach einem der vorhergehenden Ansprüche,
***gekennzeichnet durch***
eine zur Datenkommunikation mit dem Endgerät ausgebildete Zentralvorrichtung (4), insbesondere einen Zentralserver eines Dienstleistungsanbieters, insbesondere eines Service-Providers.

6. Computergestütztes System nach dem vorhergehenden Anspruch,
***dadurch gekennzeichnet, dass***
die Verifikationseinheit (2) und/oder die Vergleichseinheit (3) zumindest teilweise als Teil der Zentralvorrichtung und/oder in der Zentralvorrichtung ausgebildet ist.

7. Computergestütztes System nach dem vorhergehenden Anspruch und nach Anspruch 4,
***dadurch gekennzeichnet, dass***
die Verifikationseinheit (2) und/oder die Vergleichseinheit (3) teilweise als Teil des Endgerätes und/oder im Endgerät und teilweise als Teil der Zentralvorrichtung und/oder in der Zentralvorrichtung ausgebildet ist.

8. Computergestütztes System nach einem der vorhergehenden Ansprüche,
***dadurch gekennzeichnet, dass***
die Vergleichseinheit (2) und/oder die Verifikationseinheit (3) als Teil einer Darstellungseinheit (D), insbesondere eines auf dem Endgerät laufenden und/oder lauffähigen Internetbrowsers, WAP-Browsers, Email-Programms oder Chat-Programmes ausgebildet ist.

9. Computergestütztes System nach einem der vorhergehenden Ansprüche,
***dadurch gekennzeichnet, dass***
der zu generierende elektronische Fingerabdruck des empfangenen Datenelements in Form eines bevorzugt mehrere Komponenten (Merkmale) umfassenden, das empfangene Datenelement beschreibenden Merkmalsvektors generierbar ist und/oder dass mindestens einer der elektronischen Fingerabdrücke der vordefinierten Datenelemente in Form eines solchen Merkmalsvektors vordefiniert ist oder vordefinierbar ist, wobei mindestens eines der Merkmale anhand eines Inhalts eines Datenelements generierbar ist und/oder generiert wurde.

10. Computergestütztes System nach dem vorhergehenden Anspruch,
***dadurch gekennzeichnet, dass***
mindestens eines der Merkmale auf Basis eines bildlichen Inhalts, insbesondere einer Grafik und/oder eines Videos, eines textlichen Inhalts und/oder eines Audioinhalts eines Datenelements generierbar ist und/oder generiert wurde.

11. Computergestütztes System nach einem der beiden vorhergehenden Ansprüche
***dadurch gekennzeichnet, dass***
mindestens eines der Merkmale als aus mindestens einem Inhalt des empfangenen Datenelements berechnete Prüfsumme generierbar ist und/oder generiert wurde, wobei die Prüfsumme bevorzugt mittels einer Streuwertfunktion oder eines Ähnlichkeitsmaßes und/oder mittels eines unscharfen Berechnungsverfahrens berechenbar ist.

12. Computergestütztes System nach einem der drei vorhergehenden Ansprüche,
***dadurch gekennzeichnet, dass***
die Vergleichseinheit zum Vergleichen mindestens eines Merkmals des aus dem empfangenen Datenelement generierten elektronischen Fingerabdrucks mit mindestens einem Merkmal der elektronischen Fingerabdrücke der vordefinierten Datenelemente ausgebildet ist.

13. Computergestütztes System nach einem der vorhergehenden Ansprüche,
***dadurch gekennzeichnet, dass***
die Vergleichseinheit zum Vergleich des generierten elektronischen Fingerabdrucks des empfangenen Datenelementes auf Übereinstimmung mit den elektronischen Fingerabdrücken der vordefinierten Datenelemente mittels mindestens eines unscharfen Analyseverfahrens ausgebildet ist.

14. Computergestütztes System nach einem der vorhergehenden Ansprüche,
***dadurch gekennzeichnet, dass***
die Vergleichseinheit zum Vergleich der Herkunftsadresse des empfangenen Datenelements auf Übereinstimmung mit einer Herkunftsadresse aus einer Mehrzahl von vordefinierten Herkunftsadressen mittels mindestens eines unscharfen Analyseverfahrens ausgebildet ist.

15. Computergestütztes System nach einem der vorhergehenden Ansprüche,
***dadurch gekennzeichnet, dass***
die Vergleichseinheit eine Positivliste (P) vordefinierter elektronischer Fingerabdrücke der vordefinierten Datenelemente und/oder vordefinierter Herkunftsadressen umfasst.

16. Computergestütztes System nach dem vorhergehenden Anspruch,
***dadurch gekennzeichnet, dass***
die Vergleichseinheit eine Speichereinheit und/oder einen Cachespeicher (c) umfasst, in dem oder in denen die Positivliste zumindest teilweise abgespeichert ist und/oder abspeicherbar ist.

17. Computergestütztes System nach einem der beiden vorhergehenden Ansprüche und nach Anspruch 9,
***dadurch gekennzeichnet, dass***
mindestens einer der vordefinierten elektronischen Fingerabdrücke der Positivliste als einer der Merkmalsvektoren vorliegt.

18. Computergestütztes System nach einem der drei vorhergehenden Ansprüche,
***dadurch gekennzeichnet, dass***
die Positivliste für mindestens einen ihrer vordefinierten elektronischen Fingerabdrücke eine Überprüfungsvorschrift enthält welche angibt, wie die Verifikationseinheit einen elektronischen Fingerabdruck des empfangenen Datenelements, mit welchem dieser vordefinierte elektronische Fingerabdruck zu vergleichen ist, zu generieren hat und/oder wie der Vergleich zwischen diesen beiden elektronischen Fingerabdrücken durchzuführen ist.

19. Computergestütztes System nach einem der vorhergehenden Ansprüche,
***gekennzeichnet durch***
eine Reaktionseinheit (5), mit welcher basierend auf dem Ergebnis des Vergleichs der elektronischen Fingerabdrücke und/oder der Auswertung der Herkunftsadresse ein Reaktionsereignis auslösbar ist.

20. Computergestütztes System nach dem vorhergehenden Anspruch,
***dadurch gekennzeichnet, dass***
die Reaktionseinheit als Teil des Endgerätes ausgebildet ist und/oder dass das Reaktionsereignis beim oder im Endgerät auslösbar ist.

21. Computergestütztes System nach einem der beiden vorhergehenden Ansprüche und nach Anspruch 5,
***dadurch gekennzeichnet, dass***
die Reaktionseinheit als Teil der Zentralvorrichtung ausgebildet ist und/oder dass das Reaktionsereignis bei der oder in der Zentralvorrichtung auslösbar ist.

22. Computergestütztes System nach einem der drei vorhergehenden Ansprüche,
***dadurch gekennzeichnet, dass***
mittels der Reaktionseinheit als Reaktionsereignis ein Warnereignis, insbesondere die Anzeige einer Warnnachricht, und/oder ein Sperrereignis, insbesondere die Sperrung der Möglichkeit von Dateneingaben, und/oder ein Freischaltereignis, insbesondere die Freigabe der Möglichkeit von Dateneingaben, und/oder ein Informationsübermittlungsereignis, insbesondere die Übermittlung einer Information von dem Endgerät an die Zentralvorrichtung, und/oder ein Abschaltereignis, insbesondere eine Unterbrechung der Datenkommunikation zwischen dem Endgerät und einem Gerät von dem das empfangene Datenelement an das Endgerät übermittelt wurde, auslösbar ist.

23. Computergestütztes System nach einem der vier vorhergehenden Ansprüche,
***dadurch gekennzeichnet, dass***
ein Reaktionsereignis, insbesondere ein Freischaltereignis auslösbar ist, wenn das Ergebnis des Vergleichs ergibt, dass der generierte elektronische Fingerabdruck mit mindestens einem der elektronischen Fingerabdrücke der vordefinierten Datenelemente übereinstimmt und wenn die Auswertung der Herkunftsadresse ergibt, dass die Herkunftsadresse des empfangenen Datenelements mit mindestens einer Adresse aus einer Mehrzahl von vordefinierten Herkunftsadressen übereinstimmt.

24. Computergestütztes System nach einem der fünf vorhergehenden Ansprüche,
***dadurch gekennzeichnet, dass***
ein Reaktionsereignis, insbesondere ein Sperrereignis und/oder ein Abschaltereignis auslösbar ist, wenn das Ergebnis des Vergleichs ergibt, dass der generierte elektronische Fingerabdruck mit mindestens einem der elektronischen Fingerabdrücke der vordefinierten Datenelemente übereinstimmt und wenn die Auswertung der Herkunftsadresse ergibt, dass die Herkunftsadresse des empfangenen Datenelements mit keiner der Adressen aus einer Mehrzahl von vordefinierten Herkunftsadressen übereinstimmt.

25. Computergestütztes System nach einem der sechs vorhergehenden Ansprüche,
***dadurch gekennzeichnet, dass***
ein Reaktionsereignis, insbesondere ein Warnereignis auslösbar ist, wenn das Ergebnis des Vergleichs ergibt, dass der generierte elektronische Fingerabdruck mit keinem der elektronischen Fingerabdrücke der vordefinierten Datenelemente übereinstimmt und wenn die Auswertung der Herkunftsadresse ergibt, dass die Herkunftsadresse des empfangenen Datenelements mit mindestens einer Adresse aus einer Mehrzahl von vordefinierten Herkunftsadressen übereinstimmt.

26. Computergestütztes System nach einem der vorhergehenden Ansprüche,
***dadurch gekennzeichnet, dass***
die Vergleichseinheit eine Negativliste (N) mit einer Mehrzahl von vordefinierten Herkunftsadressen umfasst, dass die Herkunftsadresse des empfangenen Datenelements auf Übereinstimmung mit einer Adresse aus dieser Mehrzahl von vordefinierten Herkunftsadressen überprüfbar ist und dass bei Übereinstimmung der Herkunftsadresse des empfangenen Datenelements mit mindestens einer der vordefinierten Herkunftsadressen der Negativliste ein Reaktionsereignis auslösbar ist.

27. Computergestütztes System nach einem der vorhergehenden Ansprüche,
***dadurch gekennzeichnet, dass***
mindestens eine der vorgenannten Einheiten als Programm in einem Speicher ausbildbar und/oder ausgebildet ist und/oder dass mindestens eine der vorgenannten Einheiten als Hardwarekomponente ausbildbar und/oder ausgebildet ist.

28. Computergestütztes System nach einem der vorhergehenden Ansprüche,
***dadurch gekennzeichnet, dass***
mindestens eines der Datenelemente eine Internetseite umfasst und/oder dass mindestens eine der Herkunftsadressen eine weltweit eindeutige Rechneradresse, insbesondere eine Internetadresse in Form einer URL ist und/oder dass das Endgerät und/oder die Zentralvorrichtung zur Datenkommunikation über ein Netzwerk, insbesondere über das Internet, ausgebildet ist.

29. Computergestütztes System nach einem der vorhergehenden Ansprüche,
***dadurch gekennzeichnet, dass***
das Endgerät ein PC und/oder ein mobiles Endgerät, insbesondere in Form eines Mobiltelefons, eines PDA oder eines Navigationssystems, ist.

30. Computergestütztes Verfahren zur Inhaltsverifikation umfassend die Schritte
des Übermittelns eines Datenelementes von einer Herkunftsadresse an ein zur Datenkommunikation ausgebildetes Endgerät,
des Generierens eines elektronischen Fingerabdrucks aus dem von dem Endgerät von der Herkunftsadresse empfangenen Datenelements, und
des Vergleichens des generierten elektronischen Fingerabdrucks des empfangenen Datenelementes auf Übereinstimmung mit mindestens einem elektronischen Fingerabdruck mindestens eines vordefinierten Datenelements sowie des Auswertens der Herkunftsadresse des empfangenen Datenelements.

31. Verfahren nach dem vorhergehenden Anspruch,
***gekennzeichnet durch***
eine Durchführung des Verfahrens in einem computergestützten System und gemäß einem der Ansprüche 2 bis 29.

32. Verwendung eines computergestützten Systems und/oder eines computergestützten Verfahrens nach einem der vorhergehenden Ansprüche zur Betrugserkennung bei der Datenübertragung innerhalb von Netzwerken, insbesondere bei der Datenübertragung über das Internet, insbesondere zur Erkennung von Phishing-Webseiten, zur Erkennung von gefälschten und/oder urheberrechtlich geschützten Datenelementen, insbesondere von Multimediadateien, von Abbildungen und/oder von Dokumenten in elektronischer Form, und/oder zur Erstellung von Bewegungsprofilen von Nutzern.
